(19) Europäisches Patentamt / European Patent Office / Office européen des brevets

(11) **EP 4 221 326 A1**

(12) **EUROPEAN PATENT APPLICATION**
published in accordance with Art. 153(4) EPC

(43) Date of publication:
**02.08.2023 Bulletin 2023/31**

(21) Application number: **21872904.4**

(22) Date of filing: **23.09.2021**

(51) International Patent Classification (IPC):
*H04W 36/00* (2009.01)   *H04W 36/30* (2009.01)
*H04W 36/32* (2009.01)   *H04W 36/08* (2009.01)
*H04W 84/06* (2009.01)   *H04W 48/10* (2009.01)
*H04W 48/16* (2009.01)   *H04W 72/04* (2023.01)
*H04W 84/00* (2009.01)

(52) Cooperative Patent Classification (CPC):
**H04W 36/00; H04W 36/08; H04W 36/30;**
**H04W 36/32; H04W 48/10; H04W 48/16;**
**H04W 72/04; H04W 84/00; H04W 84/06;**
Y02D 30/70

(86) International application number:
**PCT/KR2021/012959**

(87) International publication number:
**WO 2022/065876 (31.03.2022 Gazette 2022/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **23.09.2020 KR 20200123144**
**06.11.2020 KR 20200147317**

(71) Applicant: **LG Electronics Inc.**
**Yeongdeungpo-gu**
**Seoul, 07336 (KR)**

(72) Inventors:
• **YOU, Hyangsun**
**Seoul 06772 (KR)**
• **KIM, Kijun**
**Seoul 06772 (KR)**
• **KO, Hyunsoo**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD FOR ACCESSING MOVING CELL, AND APPARATUS USING SAME METHOD**

(57) The present specification provides a method for accessing a cell, performed by a terminal, in a wireless communication system. The method comprises: receiving cell access configuration information; performing a cell search on the basis of the cell access configuration information; and accessing the cell on the basis of a result of the performance of the cell search, wherein the cell is a cell operated for a predetermined time at a specific location by a movable base station, and the cell access configuration information includes information related to a time resource through which the terminal accesses the cell.

FIG. 7

**Description**

**TECHNICAL FIELD**

This specification relates to wireless communication.

BACKGROUND ART

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this specification, for convenience of description, this technology may be referred to as new RAT or new radio (NR).

On the other hand, in a wide area (e.g., mountainous/desert/grassland, etc.) where a network is not built, a lot of cost is required to establish a new network, and the network utilization rate is not high.

In this specification, rather than installing a base station to cover a wide area to support a network in such an environment, it is intended to provide installation of a mobile base station so that the network can be operated at the required location at the necessary time.

**DISCLOSURE**

**TECHNICAL SOLUTION**

According to an embodiment of the present specification, provided are a method and a device for the method. The method includes receiving cell access configuration information, performing the cell search based on the cell access configuration information, and performing an access to the cell based on a result of the cell search. The cell is a cell operated by a movable base station at a specific location for a period of time, and the cell access configuration information includes information related to time resources for the user equipment (UE) to access the cell.

**ADVANTAGEOUS EFFECTS**

According to the present specification, a mobile cell environment with predictable cell operating hours can be utilized to provide a UE with cell access information, including time resources for future cell access, to enable the UE to efficiently access cells and utilize the network. This prevents the device from unnecessarily attempting to connect to the cell, which can reduce the device's energy consumption.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

**BRIEF DESCRIPTION OF THE DRAWINGS**

FIG. 1 illustrates a system structure of a New Generation Radio Access Network (NG-RAN) to which NR is applied.
FIG. 2 illustrates a functional division between an NG-RAN and a 5GC.
FIG. 3 illustrates an example of a frame structure that may be applied in NR.
FIG. 4 shows an example of a frame structure for a new radio access technology.
FIG. 5 shows an example of a 5G usage scenario to which the technical features of the present specification can be applied.
FIG. 6 schematically illustrates an example in which a base station operates a cell while moving.
FIG. 7 is a flowchart of a method of performing access to a cell according to an embodiment of the present specification.
FIG. 8 schematically illustrates an example of cell access time configuration.

FIG. 9 schematically illustrates another example of cell access time configuration.

FIG. 10 schematically shows another example of cell access time configuration.

FIG. 11 schematically illustrates an example of a single/multi-route based drone base station operation.

FIG. 12 shows an example of a handover method according to the present disclosure.

FIG. 13 is a flowchart of a method of performing access to a cell, from a UE point of view, according to an embodiment of the present specification.

FIG. 14 is a block diagram of an example of an apparatus for accessing a cell, from a UE point of view, according to an embodiment of the present specification.

FIG. 15 is a flowchart of a method of transmitting cell access configuration information from a base station perspective, according to an embodiment of the present specification.

FIG. 16 is a block diagram of an example of an apparatus for transmitting cell access configuration information from a base station perspective, according to an embodiment of the present specification.

FIG. 17 illustrates the communication system 1 applied to this specification.

FIG. 18 illustrates a wireless device applicable to this specification.

FIG. 19 shows another example of a wireless device applicable to the present specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present specification for convenience.

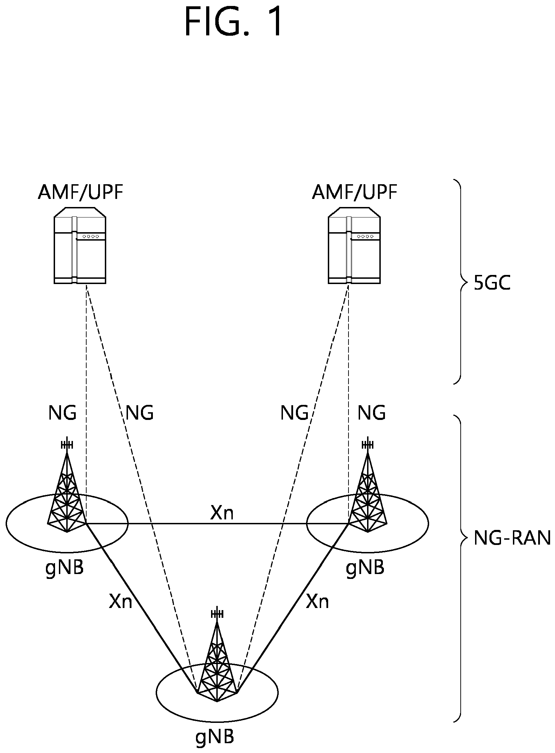

FIG. 1 illustrates a system structure of a next generation radio access network (NG-RAN) to which NR is applied.

Referring to FIG. 1, the NG-RAN may include a gNB and/or an eNB that provides user plane and control plane protocol termination to a UE. FIG. 1 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

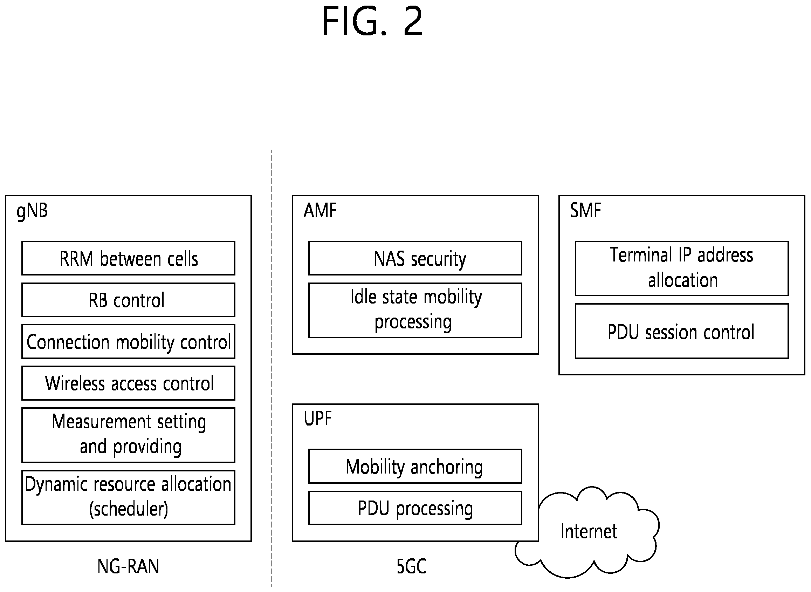

FIG. 2 illustrates a functional division between an NG-RAN and a 5GC.

Referring to FIG. 2, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

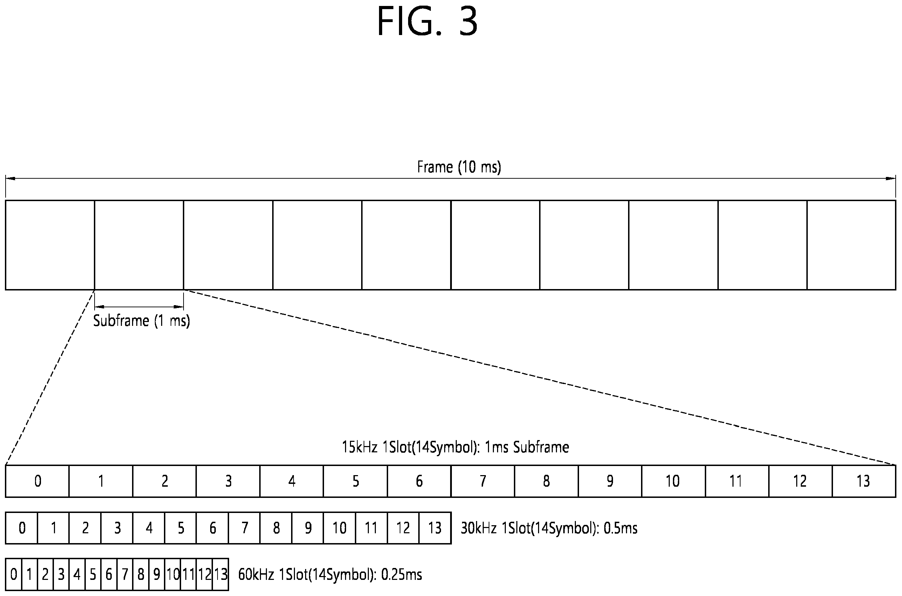

FIG. 3 illustrates an example of a frame structure that can be applied in NR.

Referring to FIG. 3, a frame may consist of 10 milliseconds (ms) and may include 10 subframes of 1 ms.

One or a plurality of slots may be included in the subframe according to the subcarrier spacing.

The following table 1 illustrates a subcarrier spacing configuration $\mu$.

[Table 1]

| $\mu$ | $\Delta f = 2^{\mu} \cdot 15 [kHz]$ | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 3, $\mu$=0, 1, 2 are exemplified. A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

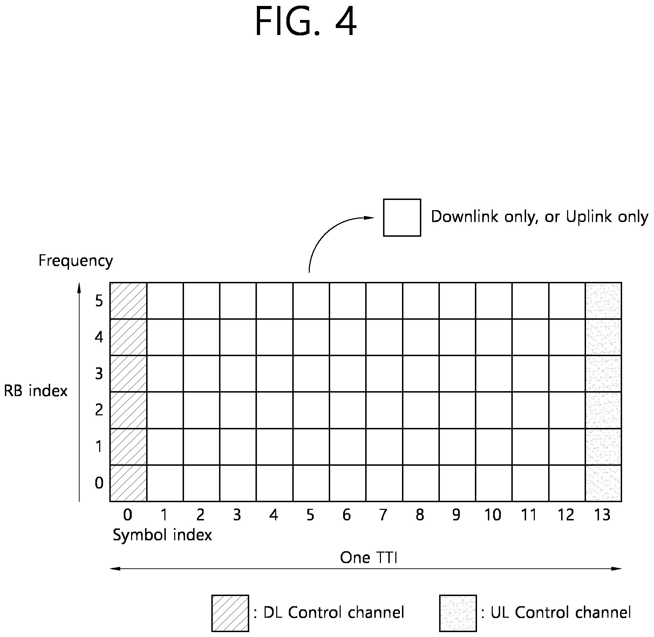

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain. In NR, the following technologies/characteristics may be applied. <Self-contained subframe structure> FIG. 4 shows an example of a frame structure for a new radio access technology.

In NR, a structure in which a control channel and a data channel are time-division-multiplexed within one TTI, as shown in FIG. 4, can be considered as a frame structure in order to minimize latency.

In FIG. 4, hatched areas represent downlink control areas, and black areas represent uplink control areas. The unmarked area may be used for downlink data (DL data) transmission or uplink data (UL data) transmission. DL transmission and UL transmission are sequentially performed within one subframe. A feature of this structure is that DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

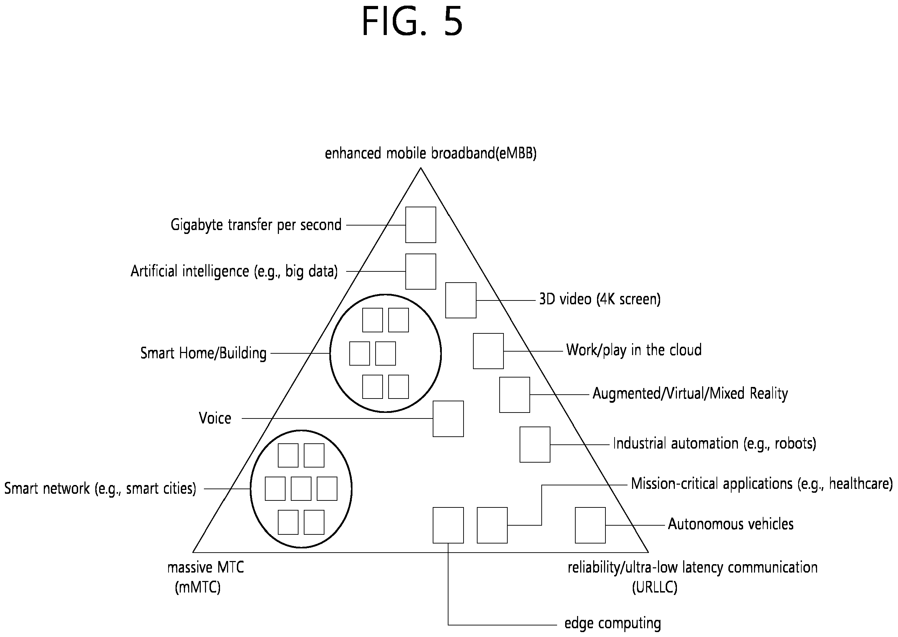

FIG. 5 shows an example of a 5G usage scenario to which the technical features of the present specification can be applied. The 5G usage scenario shown in FIG. 5 is just an example, and the technical features of the present specification may also be applied to other 5G usage scenarios not shown in FIG. 5.

Referring to FIG. 5, the three main requirements areas of 5G comprise (1) enhanced mobile broadband (eMBB) area, (2) massive machine type communication (mMTC) area, and (3) the ultra-reliable and low latency communications (URLLC) area. Some use cases may require multiple areas for optimization, while other use cases may focus on just one key performance indicator (KPI). 5G supports these diverse use cases in a flexible and reliable way.

eMBB focuses on overall improvements in data rate, latency, user density, capacity and coverage of mobile broadband access. eMBB targets a throughput of around 10 Gbps. eMBB goes far beyond basic mobile Internet access, and covers rich interactive work, media and entertainment applications in the cloud or augmented reality. Data is one of the key drivers of 5G, and we may not see dedicated voice services for the first time in the 5G era. In 5G, voice is expected to be handled simply as an application using the data connection provided by the communication system. The main causes of the increased traffic volume are the increase in content size and the increase in the number of applications requiring high data rates. Streaming services (audio and video), interactive video and mobile internet connections will become more widely used as more devices connect to the internet. Many of these applications require always-on connectivity to push real-time information and notifications to users. Cloud storage and applications are rapidly growing in mobile communication platforms, which can be applied to both work and entertainment. Cloud storage is a particular use case driving the growth of uplink data rates. 5G is also used for remote work in the cloud, requiring much lower end-to-end latency to maintain a good user experience when tactile interfaces are used. In entertainment, for example, cloud gaming and video streaming are other key factors driving the demand for mobile broadband capabilities. Entertainment is essential on smartphones and tablets everywhere, including in highly mobile environments such as trains, cars and planes. Another use case is augmented reality for entertainment and information retrieval. Here, augmented reality requires very low latency and instantaneous amount of data.

mMTC is designed to enable communication between high-volume, low-cost devices powered by batteries, and is intended to support applications such as smart metering, logistics, field and body sensors. mMTC targets 10 years of batteries and/or 1 million devices per square kilometer. mMTC enables seamless connectivity of embedded sensors in all fields and is one of the most anticipated 5G use cases. Potentially, IoT devices are predicted to reach 20.4 billion by 2020. Industrial IoT is one area where 5G is playing a key role enabling smart cities, asset tracking, smart utilities, agriculture and security infrastructure.

URLLC enables devices and machines to communicate with high reliability, very low latency and high availability, making it ideal for vehicular communications, industrial controls, factory automation, remote surgery, smart grid and public safety applications. URLLC targets latency on the order of 1 ms. URLLC includes new services that will transform industries through ultra-reliable/low-latency links, such as remote control of critical infrastructure and autonomous vehicles. This level of reliability and latency is essential for smart grid control, industrial automation, robotics, and drone control and coordination.

Next, a number of usage examples included in the triangle of FIG. 5 will be described in more detail.

5G can complement fiber-to-the-home (FTTH) and cable-based broadband (or DOCSIS) as a means of delivering streams rated at hundreds of megabits per second to gigabits per second. Such high speeds may be required to deliver TV at resolutions of 4K and beyond (6K, 8K and beyond) as well as virtual reality (VR) and augmented reality (AR). VR and AR applications include almost immersive sports events. Certain applications may require special network settings. For example, in the case of VR games, game companies may need to integrate their core servers with the network operator's edge network servers to minimize latency.

Automotive is expected to be an important new driver for 5G, with many use cases for mobile communications to vehicles. For example, entertainment for passengers requires both high capacity and high mobile broadband. The reason is that future users will continue to expect high-quality connections regardless of their location and speed. Another use case in the automotive sector is augmented reality dashboards. Drivers can identify objects in the dark above what they are viewing through the front window via an augmented reality contrast board. The augmented reality dashboard displays overlaid information to inform the driver about the distance and movement of objects. In the future, wireless modules will enable communication between vehicles, exchange of information between vehicles and supporting infrastructure, and exchange of information between vehicles and other connected devices (e.g., devices carried by pedestrians). A safety system can help reduce the risk of an accident by guiding the driver through an alternate course of action to make driving safer. The next step will be remotely controlled or self-driving vehicles. This requires very reliable and very fast communication between different autonomous vehicles and/or between vehicles and infrastructure. In the future, autonomous vehicles will perform all driving activities, leaving drivers to focus only on traffic anomalies that the vehicle itself cannot identify. The technological requirements of autonomous vehicles require ultra-low latency and ultra-high reliability to increase traffic safety to levels that humans cannot achieve.

Smart cities and smart homes, referred to as smart societies, will be embedded with high-density wireless sensor networks. A distributed network of intelligent sensors will identify conditions for cost and energy-efficient maintenance of a city or home. A similar setup can be done for each household. Temperature sensors, window and heating controllers, burglar alarms and appliances are all connected wirelessly. Many of these sensors typically require low data rates, low power and low cost. However, real-time HD video, for example, may be required in certain types of devices for surveillance.

The consumption and distribution of energy, including heat or gas, is highly decentralized, requiring automated control of distributed sensor networks. A smart grid interconnects these sensors using digital information and communication technologies to gather information and act on it. This information can include supplier and consumer behavior, enabling the smart grid to improve efficiency, reliability, affordability, sustainability of production and distribution of fuels such as electricity in an automated manner. The smart grid can also be viewed as another low-latency sensor network.

The health sector has many applications that can benefit from mobile communications. The communication system may support telemedicine, which provides clinical care at a remote location. This can help reduce barriers to distance and improve access to health services that are not consistently available in remote rural areas. It is also used to save lives in critical care and emergencies. Mobile communication-based wireless sensor networks can provide remote monitoring and sensors for parameters such as heart rate and blood pressure.

Wireless and mobile communications are becoming increasingly important in industrial applications. Wiring is expensive to install and maintain. Thus, the possibility of replacing cables with reconfigurable wireless links is an attractive opportunity for many industries. However, achieving this requires that wireless connections operate with comparable latency, reliability and capacity to cables, and that their management be simplified. Low latency and very low error probability are the new requirements that need to be connected with 5G.

Logistics and freight tracking is an important use case for mobile communications enabling the tracking of inventory and packages from anywhere using location-based information systems. Logistics and freight tracking use cases typically require low data rates, but wide range and reliable location information.

Hereinafter, this specification is described.

In a wide area (e.g., mountainous/desert/grassland, etc.) where a network is not built, a lot of cost is required to establish a new network, and the network utilization rate is not high compared to that. In order to support the network in such an environment, rather than installing a base station to cover a wide area, it may be considered to install a mobile base station so that the network can be operated at a required location at a necessary time. As a method for this, the present specification considers the following network operating environment.

For example, a base station having a shape such as a drone or a balloon may move and support data communication in a necessary area for a certain period of time. In this case, since the base station moves, data communication is not possible continuously in a specific area, but a small number of mobile base stations can move over a wide area and support minimum data communication.

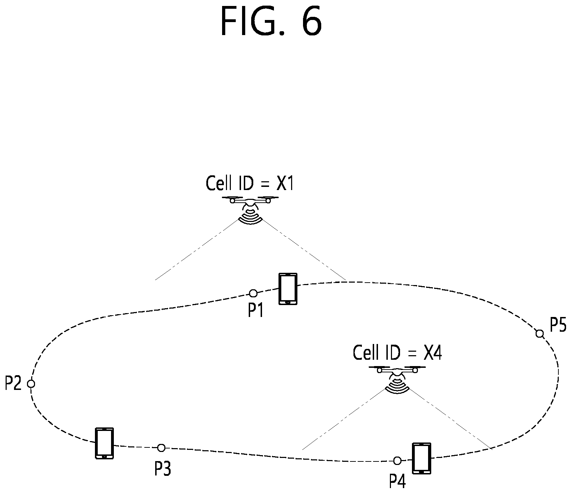

FIG. 6 schematically illustrates an example in which a base station operates a cell while moving.

In this specification, a situation in which a cell is operated is considered as follows. As shown in FIG. 6, a base station moves and operates a cell at predetermined locations for a certain period of time. In FIG. 6, each base station circulates through positions P1, P2, ..., P5, and the cell operates at each position for a certain period of time. At this time, a plurality of base stations may move and operate cells through the same route.

At this time, each base station maintains its own cell ID the same and can operate a cell at each location. In this case, in the same location, the UE shall perform access to the cell using a different cell ID according to a different base station operating the cell. On the other hand, the base station may operate the cell by applying the cell ID differently depending on the location. At this time, in the same location, different base stations can operate a cell using the same cell id. In this case, in the same location, the UE can perform access to the cell using the same cell ID regardless of the base station.

More specifically, the base station may operate as follows.

```
* Cell operation method 1
Base station A1 cycles through locations P1, P2, ..., P5 and operates a cell at
each location.
- Operates a cell using cell ID X1 for the time of D1_1 at location P1.
- Operates a cell using cell ID X1 for the time of D2_1 at location P2.
...
- Operate a cell using cell ID X1 for the time of D5_1 at location P5.
Base station A2 cycles through locations P1, P2, ..., P5 and operates a cell at
each location.
```

```
- Operates a cell using cell ID X2 for the time of D1_2 at location P1.
- Operates a cell using cell ID X2 for the time of D2_2 at location P2.
...
- Operate a cell using cell ID X2 for the time of D5_2 at location P5.
* Cell operation method 2
Base station A1 cycles through locations P1, P2, ..., P5 and operates a cell at
each location.
- Operates a cell using cell ID X1 for the time of D1_1 at location P1.
- Operates a cell using cell ID X2 for the time of D2_1 at location P2.
...
- Operate a cell using cell ID X5 for the time of D5_1 at location P5.
Base station A2 cycles through locations P1, P2, ..., P5 and operates a cell at
each location.
- Operates a cell using cell ID X1 for the time of D1_2 at location P1.
- Operates a cell using cell ID X2 for the time of D2_2 at location P2.
...
- Operate a cell using cell ID X5 for the time of D5_2 at location P5.
```

Characteristically, at each position, the cell can be operated by stopping without moving.

At this time, the UE may operate as follows.

When a cell is created around the UE, the UE can perform data communication by accessing the corresponding cell. At this time, since the cell is not always operated at a specific location, the UE needs to efficiently perform cell search and cell access using its own location and time information. On the other hand, in an environment where there are no cells around the UE, it is necessary to perform an operation for power saving without unnecessarily attempting cell access.

In such an environment, there is a feature that a cell is operated periodically at a specific location. Therefore, a situation in which the UE accesses the same cell again may occur frequently. Considering this situation, it may be helpful for the UE to efficiently perform an access process when re-accessing the same cell or a cell having similar characteristics.

In this specification, a method for a UE to effectively search for a cell and access and operate a cell in a cell environment operated with these characteristics is proposed.

Additional advantages, purposes, and features of the present specification will be described in part in the following description and will become apparent to those skilled in the art, or may be learned from practicing the present disclosure, by examining the following. The objects and other advantages of the present disclosure can be realized and achieved by the structures specifically pointed out in the appended drawings, as well as in the description and claims of the present disclosure.

The configuration, operation and other features of this specification will be understood by the embodiments of this specification described with reference to the accompanying drawings.

In this specification, based on the above-mentioned cell operation method, a method for a UE to efficiently search for a cell and access a cell and a related configuration are proposed. In order for a UE to efficiently search for and access a cell, it is necessary to consider the following.

* The UE shall attempt access to the cell in consideration of the operating time of the cell.

At this time, when the setting for the time at which the UE can access the cell is referred to as 'cell access time configuration', this setting shall be defined to support various cell operation methods. A cell ID may be determined according to a base station according to a cell operation method, or a cell ID of a base station may be determined according to a location. In addition, 'cell access time configuration' needs to be set according to the location of the UE in consideration of the mobility of the UE, and 'cell access time configuration' needs to be set for a plurality of locations.

In addition, it should be possible to set the 'cell access time configuration' in consideration of changes in the operating time of the cell. The time during which cells are created and operated may vary depending on circumstances. For example, on days/times of the week when traffic is high, cells may be generated more frequently at a specific point by using more base stations.

* Errors may occur during cell operation time.

When setting the 'cell access time configuration', which is the setting for the time at which the UE can access the cell, it should be considered that the time when the cell is created and operated may cause an error with the planned time. For example, the arrival time of a base station at a specific point may differ from the appointed time due to traffic, weather, and the like.

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

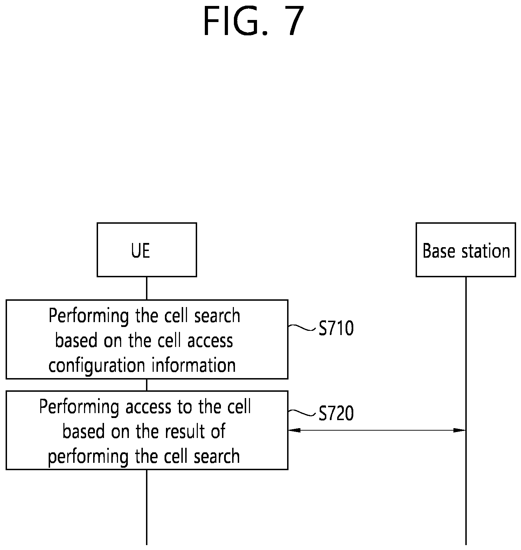

FIG. 7 is a flowchart of a method of performing access to a cell according to an embodiment of the present specification.

Prior to the description of FIG. 7, although not separately shown in FIG. 7, the UE may receive cell access configuration information.

For example, the UE may receive the above cell access configuration information from the network. Here, cell access configuration information may be broadcast. Alternatively, for example, the cell access configuration information received by the UE may be information received from a cell to which the UE previously accessed. Here, the information received by the UE is marked as 'cell access configuration information' for convenience, but this may mean 'cell access time configuration' to be described later. Since a more specific embodiment for this is the same as that described later (and/or previously described), repeated description of redundant content will be omitted for convenience of description.

According to FIG. 7, the UE may perform the cell search based on the cell access configuration information (S710). Here, the cell may be a cell operated for a certain time at a specific location by a movable base station. In addition, the cell access configuration information may be information related to time resources for the UE to access the cell. Since a more specific embodiment for this is the same as that described later (and/or previously described), repeated description of redundant content will be omitted for convenience of description.

The UE may perform access to the cell based on the result of performing the cell search (S720). Here, performing cell access may mean camping on the searched cell. Since a more specific embodiment for this is the same as that described later (and/or previously described), repeated description of redundant content will be omitted for convenience of description.

For example, the cell access configuration information may include an ID for the cell. Here, for example, the information related to the time resource may include at least one of i) duration, ii) period, and iii) at least one offset of the time resource for attempting to access the cell corresponding to the ID. Since a more specific embodiment for this is the same as that described later (and/or previously described), repeated description of redundant content will be omitted for convenience of description.

For example, the UE may attempt access to the cell in the time resource, and the UE may not attempt access to the cell in time resources other than the time resource. Since a more specific embodiment for this is the same as that described later (and/or previously described), repeated description of redundant content will be omitted for convenience of description.

For example, the UE further receives other cell access configuration information different from the cell access configuration information, and the other cell access configuration information may include a time resource for the UE to access another cell different from the cell. Since a more specific embodiment for this is the same as that described later (and/or previously described), repeated description of redundant content will be omitted for convenience of description.

For example, the time resource may be a time resource in which the cell is operated or a time resource in which the cell is operated with a high probability. Since a more specific embodiment for this is the same as that described later (and/or previously described), repeated description of redundant content will be omitted for convenience of description.

For example, the cell access configuration information may include time resource information for periodic cell access or time resource information for aperiodic cell access. Since a more specific embodiment for this is the same as that described later (and/or previously described), repeated description of redundant content will be omitted for convenience of description.

For example, the UE may perform handover within a specific time period based on receiving a handover command message. Here, for example, the specific time interval may be determined based on information related to the time resource. Since a more specific embodiment for this is the same as that described later (and/or previously described), repeated description of redundant content will be omitted for convenience of description.

For example, the base station is a drone or a hot air balloon, and the cell operated by the base station may have a fixed cell ID or a cell ID that varies according to movement. Since a more specific embodiment for this is the same as that described later (and/or previously described), repeated description of redundant content will be omitted for convenience of description.

Hereinafter, the specific embodiment described in FIG. 7 will be described through sections A to F.

A. Cell access time configuration

In order for the UE to efficiently search for a cell and access the cell, 'cell access time configuration' may be configured from the network. This cell access time configuration may have the following characteristics.

As described above, 'cell access time configuration' may correspond to 'cell access configuration information' described above, and the above terms are used interchangeably for convenience of description.

The cell access time configuration may be set through, for example, MIB broadcast by the network.

Meanwhile, in the present specification, an MIB as shown in Table 4 below may be provided, and the MIB at this time may include system information transmitted on the BCH.

[Table 4]

```
-- ASN1START
-- TAG-MIB-START

MIB ::=                          SEQUENCE {
    systemFrameNumber                   BIT STRING (SIZE (6)),
    subCarrierSpacingCommon             ENUMERATED {scs15or60,
scs30or120},
    ssb-SubcarrierOffset            INTEGER (0..15),
    dmrs-TypeA-Position              ENUMERATED {pos2, pos3},
    pdcch-ConfigSIB1                 PDCCH-ConfigSIB1,
    cellBarred                       ENUMERATED {barred, notBarred},
    intraFreqReselection             ENUMERATED {allowed, notAllowed},

physCellId          PhysCellId,
```

```
location                         Cell-location,
cell-access-time            ENUMERATED {t1, t2, ... },

physCellId          PhysCellId,
location                         Cell-location,
cell-access-time            ENUMERATED {t1, t2, ... },

    spare                                BIT STRING (SIZE (1))
}
-- TAG-MIB-STOP
-- ASN1STOP
```

Here, each parameter may be as follows.

- cellBarred

A value of 'barred' means that the cell is barred. This field is ignored in IAB-MT.

- dmrs-TypeA-Position

Location of (first) DM-RS for downlink and uplink.

- intraFreqReselection

Control cell selection/reselection for cells in the frequency when the highest priority cell is barred or treated as barred by the UE. This field is ignored in IAB-MT.

- pdcch-ConfigSIB1

Determine a common ControlResourceSet (CORESET), common search space and required PDCCH parameters. If the field ssb-SubcarrierOffset indicates that SIB1 is not present, the field pdcch-ConfigSIB1 indicates a frequency location where a UE can find an SS/PBCH block with SIB1 or a frequency range in which the network does not provide an SS/PBCH block with SIB1.

- ssb-SubcarrierOffset

Corresponds to kSSB, which is the frequency domain offset (number of subcarriers) between the SSB and the entire resource block grid.
The value range of this field may be extended by additional most significant bits encoded within the PBCH.
This field may indicate that there is no CORESET#0 configured in the MIB as this cell does not provide SIB1. In this case, the field pdcch-ConfigSIB1 may indicate a frequency location where the UE can (not) find the SS/PBCH with the control resource set and search space for SIB1.

- subCarrierSpacingCommon

Subcarrier spacing for SIB1, Msg.2/4 for initial access, paging and broadcast SI messages. When the UE acquires this MIB on the FR1 carrier frequency, the scs15or60 value corresponds to 15 kHz and the scs30or120 value corresponds to 30 kHz. When the UE acquires this MIB on the FR2 carrier frequency, the scs15or60 value corresponds to 60 kHz and the scs30or120 value corresponds to 120 kHz. For operation using shared spectrum channel access, the subcarrier spacing for SIB1 is the same as for the corresponding SSB and this IE is instead used to derive the QCL relationship between SS/PBCH blocks in the serving cell.

- systemFrameNumber

The most significant 6 bits (MSB) of the 10-bit system frame number (SFN). The 4 LSBs of SFN are carried in the PBCH transport block as part of the channel coding (i.e. outside the MIB encoding).
Meanwhile, according to an embodiment of the present specification, the following information may be included along with parameters in the MIB described above and transmitted. However, an example in which the following information is transmitted through the MIB may be only an example. That is, the information below may be signaled through a method different from MIB (e.g., a method in which the information below is transmitted through dedicated signaling).
More specifically, the network may set a cell ID (physCellId), a location of a cell corresponding to the cell ID, a cell-access-time, and the like to the UE. While the example above shows how to provide at least one of the predetermined times to access a cell, direct notification of the corresponding time may be informed, or i) Period: Period of time interval to try to access the cell, ii) Offset: Offset of time interval to try to access the cell, iii) Duration : the duration of the time interval during which access to the cell is attempted may be informed (described in more detail below).
As described above, this configuration can be performed in various ways, and configuration through the MIB is only an example, not a limitation (system information, UE-specific RRC message, MAC message, DCI, or at least two of these setting may be performed in various ways by combinations, etc.).
The cell access time configuration may include information on time resources through which the UE may attempt access to a cell having a specific cell ID. Accordingly, the UE receives time resource information capable of accessing a specific cell through one cell access time configuration.
Upon receiving this information, the UE can attempt access to a cell having a corresponding cell ID within a corresponding time resource. Through this, it is possible to prevent the UE from unnecessarily attempting an access at a time when a cell is not generated/operated.
The UE may receive a plurality of cell access time configurations. This may be for configuring cell access available time resources for different cell IDs and/or locations for one UE. For example, when a UE receives a plurality of cell access time configurations, each cell access time configuration may be a setting for a different cell ID. This may be, for example, to set cell access time configurations for different locations when operating cells using different cell IDs according to locations, as in the above-described 'cell operation method 2'. Or, for example, to set cell access time configurations for different base stations in the same location when operating cells using different cell IDs according to base stations as in the above-described 'cell operating method 1'.

Meanwhile, according to the present specification, a UE receives a single cell access time configuration, and at this time, information on a plurality of cell IDs and/or locations may be included in one cell access time configuration. The plurality of pieces of information included here are, for example, i) Period: periods of time intervals in which access to the cell is attempted, ii) Offset: offsets in time intervals in which access to the cell is attempted, iii) Duration: this may be durations of time intervals during which access to the cell is attempted. Since a more specific embodiment for this is the same as that described later (and/or previously described), repeated description of redundant content will be omitted for convenience of description.

When the cell access time configuration is set from the UE point of view, the following operation may be performed.

- The cell access time configuration may mean the time during which the cell is operated. Accordingly, the UE may attempt cell search and access assuming that a cell exists within the configured time interval. Alternatively, in this case, since it can be determined that a cell exists, access to a corresponding cell can be attempted without a cell search process. In this case, the UE determines that a cell does not exist outside the corresponding time interval and does not perform an operation to search for or access the corresponding cell. That is, whether an operation for searching a cell or performing an access may be dependent on whether or not it is within a time interval set through cell access time configuration.

- The cell access time configuration may mean a time when a cell is operated with a probability or a high probability. Therefore, the UE cannot assume that the cell always exists in the corresponding time interval. However, since it is a time interval in which a cell is likely to exist, the UE may determine that there is a high probability of finding a corresponding cell in the corresponding interval, and may attempt cell search and access. On the other hand, it cannot be determined that the cell does not exist outside the corresponding time interval, but it can be determined that the probability that the cell exists is low. That is, cell detection may be successful and access to a cell may be possible even in an area other than the corresponding time interval. In this case, the UE may not perform an operation for searching or accessing a corresponding cell outside the corresponding time interval. Alternatively, the UE may perform cell search less frequently without actively performing cell search outside the corresponding time interval. That is, the frequency of performing an operation for cell search or access can be determined depending on whether or not it is within a time interval set through cell access time configuration.

- A power saving mode operation (e.g., monitoring of a specific signal is not performed) may be performed outside the time interval set by the cell access time configuration. That is, whether or not the UE performs the power saving mode operation (or the strength of the power saving operation) may depend on whether or not it is within the time interval set through the cell access time configuration.

The time period set by the cell access time configuration may be the same as or a part of the actual cell operating time. For example, during the latter part of a cell's operation, since the base station will soon cease operation and leave the area, that time window can be excluded from the resources set by the cell access time configuration to prevent new devices from unnecessarily attempting to connect.

This cell access time configuration may be specifically configured as the following periodic setting and/or aperiodic setting.

B. Periodic setting

Periodic cell access time configuration sets periodic cell access available time resource information. The UE may receive periodic time resource information through cell access time configuration. The cell access time configuration includes all or part of the following information.

- Cell ID

This means cell ID information of an operating cell.

- location

It means location information where a cell is created. This may mean a center location where a cell is created.

The UE can use the corresponding information to determine a cell to attempt an access to.

- Period

This means the period of the time interval during which access to the cell is attempted.

- offset

This means the offset of the time interval during which access to the cell is attempted.

- Duration

This means the duration of the time interval during which access to the cell is attempted. Alternatively, the duration of the cell's operation can be determined as X msec from a point in time determined by the period and offset, or a time interval of - X msec to X msec from a point in time determined by the period and offset, without setting a separate duration.

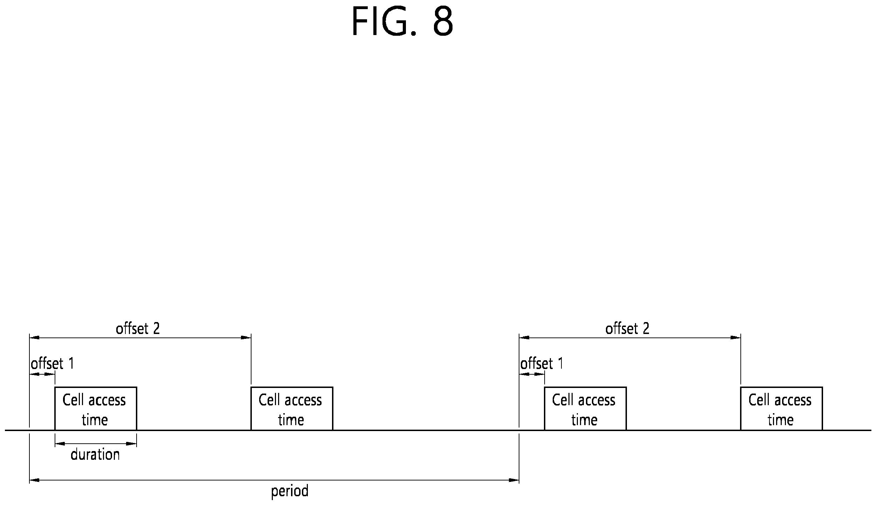

FIG. 8 schematically illustrates an example of cell access time configuration.

In this case, a plurality of offsets may be set for one cell access time configuration. This may be to indicate cell access times for different base stations having the same cell ID or cell access times for different locations through each offset. When two offset values, offset 1 and offset 2, are set, it means that a cell access time interval having a set period, offset 1, and duration and a cell access time interval having a period, offset 2, and duration exist. When there are multiple offset values, an independent duration may be set for each offset value. FIG. 8 shows cell access time intervals when a plurality of offsets are set for one cell access time configuration. As shown in FIG. 8, the UE may determine that cell access times having the same period and duration exist for two offsets of offset 1 and offset 2, respectively.

Alternatively, a plurality of positions may be set in one cell access time configuration. In this case, an independent period, offset, and/or duration may be set for each position.

When the time at which a cell is created/operated is changed or an error (e.g., delay) occurs, information on cell access time configuration needs to be changed to reflect this. To do this, the following method can be used.

* Alt 1. Cell access time configurations can be reconfigured. At this time, only some information of the cell access time configuration may be reconfigured and only the reconfigured information may be updated. For example, when only the offset value of a specific cell access time configuration is reconfigured, other values may be maintained as standard and only the offset value may be updated. At this time, the network may directly notify the changed offset value. Alternatively, if the value of offset_d, which is a change value from the existing offset, is notified, the UE can determine the existing offset + offset_d as an updated offset value. The information thus reconfigured is continuously applied thereafter.

* Alt 2. Cell access time interval information is changed only for the next cell access time interval once without reconfiguring the cell access time configuration. For example, in consideration of a situation in which the next arriving base station temporarily fails to match the time, the UE may be notified of the offset value changed for the next cell access time interval. At this time, the UE determines the cell access time interval by applying an offset value that is changed only for the next cell access time interval. After that, the cell access time interval is determined by applying the existing cell access time configuration information again. At this time, the network may directly notify the changed offset value. Alternatively, if the value of offset_d, which is a change from the existing offset, is notified, the UE determines the existing offset + offset_d as the updated offset value.

At this time, it is determined that the cell access time interval exists during the duration interval starting from the updated offset position. That is, even if the position of the offset is changed, the duration of the cell access time interval may be constant. On the other hand, it is determined that the cell access time interval starts from the updated offset position, but ends after the duration time based on the existing offset. That is, the cell access time interval starts at offset + offset_d and ends at the position of offset + duration. In this case, even if the offset location is changed, the point at which the cell access time interval ends may be constant.

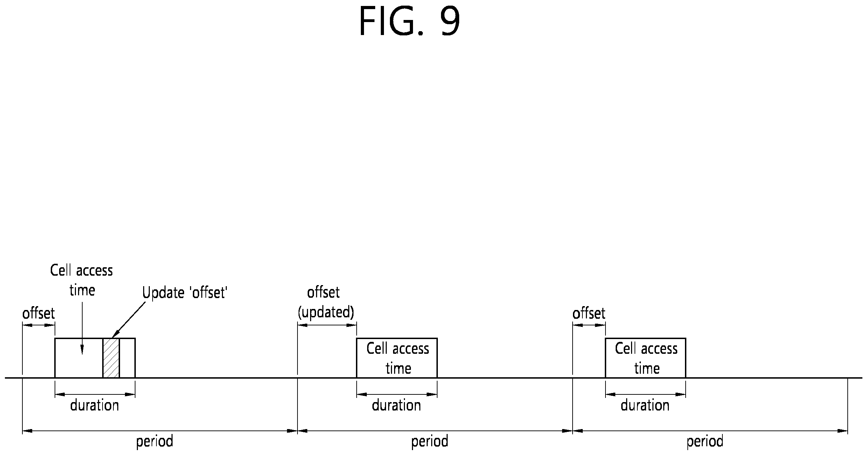

FIG. 9 schematically illustrates another example of cell access time configuration.

An example of this is shown in FIG. 9. The UE may determine the cell access time according to the cell access time configuration configured from the network and attempt to access the cell. At this time, while the UE is connected to the cell, it may receive an indication of a changed offset value for the next cell access time from the cell. This indication may be delivered through signaling such as RRC, MAC CE, and DCI. In the figure, the UE is instructed to update the offset in the first cell access time interval. In this case, the UE may determine the cell access time by applying the changed offset value for the next cell access time. In the figure, the UE determines the cell access time using the offset changed for the second cell access time interval. After that, the cell access time is determined using the existing offset value again.

By extending this, cell access time interval information can be changed for the following cell access time intervals.

- Changed cell access time interval information may be applied to the next cell access time interval of the cell access time interval for which change information of the cell access time interval information has been instructed.
- Changed cell access time interval information can be applied to N cell access time intervals from the next cell access time of the cell access time interval in which the change information of the cell access time interval information is instructed. At this time, the value of N may be fixed to a specific value or configured from the network.
- Changed cell access time interval information may be applied to the cell access time located after the $M^{th}$ cell access time interval from the cell access time interval in which the change information of the cell access time interval information is instructed. At this time, the value of M or the value of N may be fixed to a specific value or configured from the network.

C. Aperiodic setting

Aperiodic cell access time configuration sets aperiodic cell access available time resource information. The UE may receive aperiodic time resource information set through cell access time configuration. The cell access time configuration includes all or part of the following information.

* Cell ID

This means cell ID information of an operating cell.

* location

It means location information where a cell is created. This may mean a center location where a cell is created. The UE can use the corresponding information to determine a cell to attempt an access to.

* offset

This means the offset of the time interval during which access to the cell is attempted. A reference time point for determining such an offset value may be as follows.

- Alt 1. Cell access time interval including the time when the cell access time configuration is received or the start or end symbol of the most recent cell access time interval located before the cell access time configuration is received.
- Alt 2. Start or end symbol where PDSCH transmission including cell access time configuration is performed.
- Alt 3. Start or end symbol of slot where PDSCH transmission including cell access time configuration starts.
- Alt 4. Start or end symbol of slot where PDSCH transmission including cell access time configuration ends.
- Alt 5. Start or end symbol in which transmission of a PDCCH scheduling a PDSCH including cell access time configuration is performed.
- Alt 6. Start or end symbol of a slot in which transmission of a PDCCH scheduling a PDSCH including cell access time configuration starts.
- Alt 7. Start or end symbol of slot where transmission of PDCCH scheduling PDSCH including cell access time configuration ends.

* duration

This means the duration of the time interval during which access to the cell is attempted. Alternatively, for X msec from the point determined by the period and offset without setting a separate duration, or a time interval of -X msec to X msec from a point determined by the period and offset may be determined as a time interval in which the cell is operated.

In this case, a plurality of offsets may be set for one cell access time configuration. This may be to indicate cell access times for different base stations having the same cell ID or cell access times for different locations through each offset. When two offset values of offset 1 and offset 2 are set, it means that a cell access time interval having set offset 1 and duration and a cell access time interval having offset 2 and duration exist, respectively. When there are multiple offset values, an independent duration may be set for each offset value.

Alternatively, a plurality of positions may be set in one cell access time configuration. In this case, an independent period, offset, and/or duration may be set for each position.

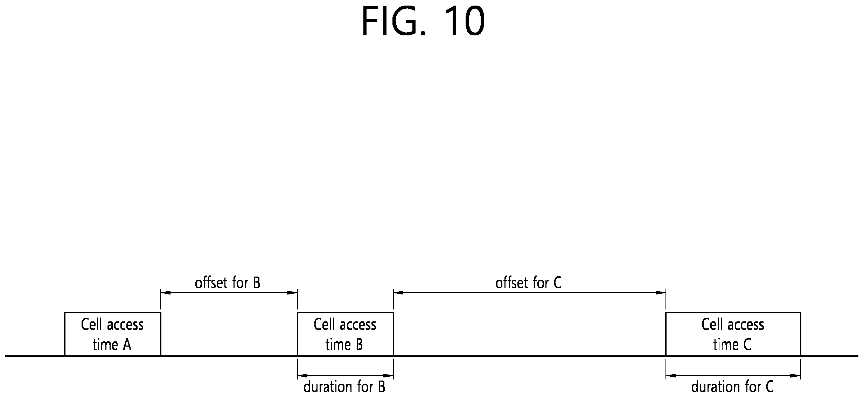

FIG. 10 schematically shows another example of cell access time configuration.

FIG. 10 shows an example in which aperiodic cell access time is set. If the UE receives the cell access time configuration for the next cell access time interval while accessing the cell, the UE can determine the next cell access time interval using the corresponding setting. In FIG. 10, a UE receives cell access time configuration for a cell access time interval B while accessing a cell using a cell access time interval A. Through this, the UE can determine the position of the cell access time B section. In addition, while the UE accesses the cell using the cell access time interval B, the cell access time configuration for the cell access time interval C is configured. Through this, the UE can determine the location of the cell access time interval C.

At this time, characteristically, all necessary settings are transmitted when the cell access time configuration is first set, but after that, the cell access time interval can be set by setting only the necessary specific settings. For example, when setting the cell access time interval for the first time, all settings necessary for setting the above-mentioned cell access time are set. However, when configuring the next cell access time interval, the cell access time interval may be configured by configuring only an offset value or only an offset and duration value. At this time, for other settings, initially/previously configured values may be used.

On the other hand, the present specification also provides the following configuration.

In the present specification, a method and apparatus for providing a mobile communication service by a drone base station in an area such as a mountainous island where a ground base station cannot provide service is proposed. A drone base station can be interpreted as a base station that has mobility and operates with limited battery resources.

A drone base station provides a mobile communication service at a specific location or while moving to a plurality of locations.

The drone base station returns to the operating station and performs charging when the remaining battery capacity is below a certain value due to the battery capacity limit. Therefore, in order to provide continuous communication service in the area where drone base stations provide service, drone base stations with a sufficient number of drone base stations and sufficient battery capacity are required, and there are economic difficulties in satisfying these requirements.

In this specification, a method for a UE to effectively use a network service and perform cell handover in a cell environment operated with these characteristics is proposed.

D. Intermittent mobile communication service support

For convenience of explanation, regions A and B are defined as follows.

* Area A; mobile communication service coverage area at all times. Service coverage area of terrestrial base station
* Area B; Areas where intermittent mobile communication service is provided. Service coverage area of drone base station

When the UE moves from area A to area B, the UE receives information about the drone base station service location, drone base station operating time and frequency resources in area B in advance from the network.

Alternatively, the UE agrees to use the 'intermittent mobile communication service' when moving from area A to area B. Thereafter, information on service use (information on drone base station service location in area B, operation time of drone base station and frequency resources, etc.) is requested, and the corresponding information is set.

To use the 'intermittent mobile communication service', the UE agrees to use the 'intermittent mobile communication service' when moving/entering area B, and the 'intermittent mobile communication service' can be supported for the UE that has agreed to this.

When the UE is in the 'intermittent mobile communication service' area, the UE informs that the user is in the 'intermittent mobile communication service' area. Alternatively, when the user attempts to use a mobile communication service (phone call, message, internet, etc.) in area B, the UE informs that the user is in the 'intermittent mobile communication service' area. If the UE is in the 'intermittent mobile communication service' area, the UE displays whether or not the mobile communication is currently available. If mobile communication is currently unavailable, the UE displays the waiting time until service is available.

If the UE attempts to send SMS at a time when mobile communication is unavailable in the 'intermittent mobile communication service' area, SMS transmission is performed automatically at the time when the service is available. When an SMS is sent to the UE as a receiver at a time when mobile communication is not available, the SMS is automatically transmitted to the UE at a time when the service is available.

When a UE attempts to transmit traffic with a delay tolerant characteristic at a time when mobile communication is not available in the 'intermittent mobile communication service' area, the UE automatically transmits traffic at a time when the service is available.

In the case of a call service request for a UE at the time when mobile communication is not available in the 'intermittent mobile communication service' area as a receiver, the sender is notified that real-time call service is not available because the receiver is in the intermittent service area.

E. Drone base station operation method

E.1. Drone base station operation based on single/multi-route

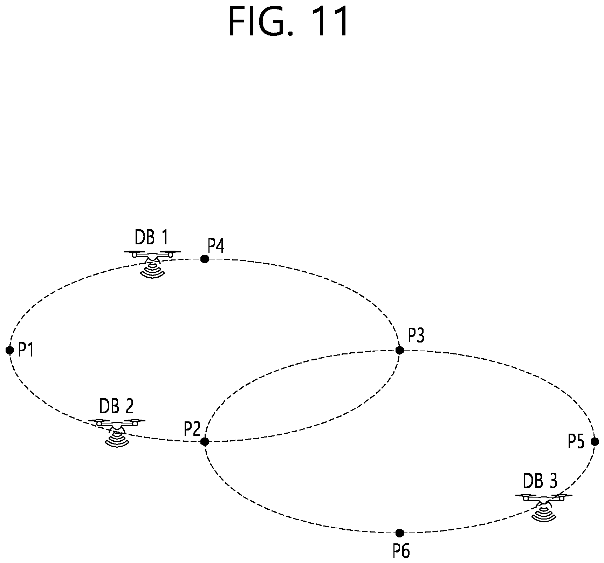

FIG. 11 schematically illustrates an example of a single/multi-route based drone base station operation.
If the 'intermittent mobile communication service' area is a small area, the service can be provided in a single route method. For example, when a plurality of different locations P1, P2, P3, and P4 exist, P1, P2, P3, and P4 constitute one route. The drone base station (DB) circulates P1, P2, P3, and P4 in order and provides mobile communication service for a specific time interval at each location. A plurality of drone base stations can circulate through one route to provide mobile communication services.
When the area of 'intermittent mobile communication service' becomes vast, it can be expanded in a multi-route method. One drone base station circulates one route to provide mobile communication service for a specific time interval at each location. For example, in FIG. 11, there are two routes. Route R1 is composed of P1, P2, P3, and P4, and route R2 is composed of P2, P3, P5, and P6. DB1 and DB2 are operated on R1, and DB3 is operated on R2.
Multiple routes may overlap in some places. In FIG. 11, routes R1 and R2 overlap at locations P2 and P3. In this case, in cells formed by drone base stations operating in each route, inter-cell interference may occur, which may cause a problem. In order to prevent this problem, the center frequency of a cell operated by a drone base station may be differently allocated for each route. That is, cells are operated using different center frequencies for each route. For example, DB1 and DB2 operating on route R1 form a cell providing mobile communication service at center frequency f1, and DB2 operating on route R2 form a cell providing mobile communication service at center frequency f2.
In addition, when different routes overlap, the operating altitudes of drones operating along each route may be different to prevent physical collision between drone base stations operating on different routes. That is, the operating altitude of the drone may be different for each route. Therefore, the radius of cells formed in each route may be different.

E.2. Drone base station operation based on fixed location

Unlike the route method, the drone base station does not move to a plurality of locations to operate the cell, but the drone base station can operate the cell by stopping at a fixed location. At different locations, different drone base stations operate the cells. The drone base station returns to the operating station and performs charging when the remaining battery capacity is below a certain value due to the battery capacity limit. Therefore, a single drone base station cannot continuously create and operate a cell at a specific location. Another drone base station DB2 may operate the cell at the same location P1 while drone base station DB1 stops operating the cell at location P1 and returns to the operating station and performs charging.

F. Handover Process

In the single/multi-route based drone base station operation of Section E.1 above, one or a plurality of drone base stations provide mobile communication service for a certain period of time at specific locations within a specific route. From the point of view of each location, cells operated by the same or different drone base stations are sequentially created for a certain period of time and then disappear. For example, in periodic/aperiodic period T1, drone base station DB1 creates and operates a cell, and in periodic/aperiodic period T2, drone base station DB2 creates and operates a cell. Time intervals T1 and T2 may or may not overlap each other. From the point of view of the UE, even if the UE is fixed in the same location, the drone base station operating the currently accessed cell terminates the operation of the cell and the cell disappears. After a specific start, a process of generating cells operated by different/same drone base stations is repeatedly performed.
In the drone base station operation based on the fixed location of Section E.2 above, the drone base station operating the currently accessed cell terminates the operation of the cell to recharge the battery, and the cell disappears, after a specific start, a process of generating cells operated by different/same drone base stations is repeatedly performed.
That is, the UE is required to terminate the connection with the cell currently operated by the first drone base station and perform the connection with the cell operated by the second drone base station.
In the following description, the first drone base station, which is the current serving drone base station of the UE, is abbreviated as DB_L, and the second drone base station to provide service in the next time period is abbreviated as DB_A. The cell operated by the first drone base station is called a leaving cell (Cell_L), and the cell operated by the second drone base station is called an arriving cell (Cell_A). In a handover procedure of an existing cellular mobile communication system, a leaving cell operated by DB_L and an arriving cell operated by DB_A become a serving cell and a target cell, respectively.

F.1. Information setting method for handover between drone base stations

The current serving drone base station DB_L notifies the arrival/operating time of the next serving drone base station DB_A or corrects the previously informed time. This information can be delivered to the UE through a message (e.g., a handover command message) set by DB_L to perform handover to DB_A. Hereinafter, a message in which DB_L sets information for performing handover to DB_A to the UE will be referred to as a handover command message (HCM). This may mean a message different from the handover command message of the existing cellular mobile communication system.

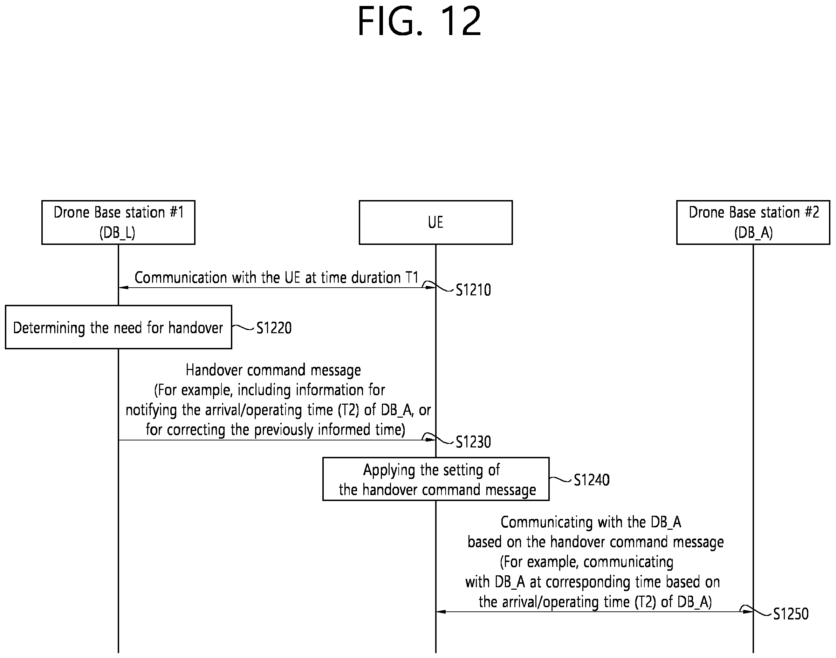

FIG. 12 shows an example of a handover method according to the present disclosure.

DB_L (Drone Base station #1) may perform communication with the UE for a specific time (e.g., T1) (S1210).

DB_L determines the need for handover of the UE (S1220). For example, the need for handover of the UE may be determined based on various criteria/reasons such as i) whether the remaining battery capacity of DB_L is below a certain value, ii) whether the estimated distance between DB_L and the UE is above a certain value, iii) whether the signal strength received from the UE is below a certain value, etc. This handover necessity determination process may be omitted in some cases. For example, when the UE is in a fixed location and DB_L and DB_A perform regular movement, handover necessity determination may be omitted a certain number of times.

If it is determined that handover of the UE is necessary, DB_L transmits a handover command message (handover command message) to the UE (S1230). The handover command message may include, for example, information for notifying the arrival/operating time (e.g., T2) of the next serving drone base station, DB_A, or correcting the previously informed time. In addition, various information required for handover (e.g., cell ID, center frequency location, C-RNTI to be used by the UE in the corresponding cell, etc. described below) may be further included.

The UE may apply the setting of the handover command message (S1240) and communicate with the drone base station #2 (DB_A) based on the handover command message (S1250). For example, it can attempt to connect to DB_A according to the arrival/operating time (T2) of DB_A notified by DB_L.

Meanwhile, in FIG. 12, DB_L (Drone Base Station #1) determines the need for handover of the UE, but the UE may determine the need for handover itself. In this case, the UE may request a handover command from Drone Base Station #1 (DB_L) and receive the aforementioned handover command message as a response thereto.

DB_L and DB_A may use the same physical cell ID. In this case, if there are no additional instructions, the UE uses the C-RNTI granted by DB_L for transmission and reception with DB_A. That is, the C-RNTI used in Cell_L is used in Cell_A as it is. In this case, the UE receives a handover command message from DB_L (cell_L), but information such as center frequency location, cell ID and/or C-RNTI may not be set.

Meanwhile, DB_L and DB_A may use different physical cell IDs. In this case, the UE receives a C-RNTI to be used with DB_A (to be used in Cell_A) through a handover command message from DB_L (Cell_L). In addition, information such as cell ID and/or center frequency of cell_A is designated.

Cell_L may designate a plurality of Cell_A to the UE. When a plurality of routes overlap with the location of the UE or considering the movement of the UE, handover to a cell existing in an adjacent route as well as the same route may be considered. To this end, the UE may receive handover command messages for a plurality of cells_A from cell_L.

For example, the first handover command message (HCM1) is a message for a cell having the same center frequency and the same cell ID, and may not include information such as the cell ID for the arriving cell, the location of the center frequency, and/or C-RNTI to be used by the UE in the cell, etc. The second handover command message (HCM2) is a message for a cell having a different center frequency and a different cell ID, may include information such as a cell ID for an arriving cell, a center frequency location, and/or a C-RNTI to be used by the UE in that cell. The UE selects one arriving cell according to circumstances and performs access based on the configured HCM information.

F.2. Handover method between drone base stations

When the UE receives the C-RNTI to be used in the arriving cell through the handover command message, etc., the UE monitors the PDCCH from the operating start time of the arriving cell and receives the 'PDCCH order' for the designated C-RNTI and CFRA (Contention free Random Access) is performed using the RACH resource allocated in the 'PDCCH order'. If the 'PDCCH order' of the designated C-RNTI is not received within a predetermined time from the operating time of the arriving cell, CBRA (Contention Based Random Access) is performed.

If the UE has not been configured with the C-RNTI to be used in the arriving cell, the UE performs an initial access process with the arriving cell from the start of operation of the arriving cell or within the start time of the operation to establish a connection tie up.

Additionally, the UE may perform RSRP measurement on the arriving cell before performing the above process. The UE performs RSRP measurement from the start of operation of the arriving cell or within the start time of operation, and if the RSRP measurement value is greater than or equal to a specific threshold, the handover process and the initial access process are performed. At this time, if the RSRP measurement value does not exceed a specific threshold value within a specific time interval T1, the handover and initial access process for the corresponding arriving cell may not be performed. The time interval T1 during which these RSRP measurements are made and/or the threshold value of RSRPRSRP may be set from the network or may be a predefined value.

During the existing handover, the UE shall complete the handover process within a handover interrupt time from the time of receiving the handover command message. However, since the arriving cell created by DB_A does not currently exist, but is created after a certain period of time, if the handover is performed in the same way as the present, there is a very high possibility that the UE cannot complete the handover process to the arriving cell within the handover interrupt time. To this end, the handover interrupt time may operate as follows. At this time, or the handover interrupt time, in addition to the definition of the existing handover interrupt time, may mean a time duration for the UE to complete the handover from a specific point in time.

a) The handover interrupt time starts from the operating start time of the arriving cell and the timer operates. This operation start time means the operation start (expected) time of the arriving cell configured by the UE from the network.
b) The handover interrupt time starts from the point at which the UE starts an operation for handover to the arriving cell (i.e., the point at which it starts attempting to receive a channel/signal of the arriving cell) and the timer works.
c) The handover interrupt time starts from the time point when the UE detects the arriving cell, and the timer operates.
d) From a specific point set or determined by the network, the handover interrupt time starts and the timer operates. More specifically, the handover interrupt time starts after T_A from the time point at which the UE receives the handover command message, and the timer operates. T_A may be set from the network or may be a predetermined value. When the UE detects an arriving cell before T_A from the time of receiving the handover command message, the handover interrupt time may start immediately and the timer may operate.

Regarding the handover, although not shown separately, when the UE performs the handover, the handover may be performed based on the cell access configuration information in FIG. 7 described above.

For example, the cell access configuration information described above may be included in the handover command message received by the UE. In this case, the cell access configuration information may include i) Period: a period of time intervals in which access to the handover target cell is attempted, ii) Offset: offset of a time interval during which access to a handover target cell is attempted, iii) Duration: it may include information about the duration of a time interval during which access to a handover target cell is attempted.

Or, for example, the UE may receive cell access configuration information for the handover candidate cell separately from the handover command message. Cell access configuration information here is as described above, so a separate description thereof will be omitted. In this case, when the UE receives the handover command message, the UE may perform handover to the handover target cell indicated in the handover command message based on previously set cell access configuration information.

Meanwhile, although not separately illustrated, the present specification also provides an embodiment for a case of handover failure.

When receiving a handover command message from the base station, the UE may initiate a handover procedure. In the handover procedure herein, the extended handover interrupt time (i.e., a longer handover interrupt time than before) may be applied to the UE.

If the UE does not complete the handover procedure even within the extended handover interrupt time, the UE may declare handover failure. After this, the UE may initiate a cell search procedure to search for another cell.

Here, the cell access configuration information described above may be used by the UE in which the handover has failed to perform the cell search procedure. That is, the UE may perform cell search based on a predetermined period, offset, duration, etc., using cell access configuration information that has been broadcasted, previously set, or previously set in the UE.

According to the embodiments of the present specification, the following effects may be provided.

As described above, in a moving cell environment, a type in which a cell is operated periodically/non-periodically for a partial time period may be considered. In this case, the UE may be in an environment in which it can use the network by accessing the cell only for a limited time. In such an environment, an existing UE may waste a lot of energy by unnecessarily continuously attempting to access a cell in time resources when the cell is not operated.

In the present specification, by using a movable cell environment in which the operating time of the cell is predictable, the UE can efficiently access the cell and use the network by providing the UE with cell access-related information including time resources for accessing the cell in the future. As a result, the UE is prevented from attempting to access the cell unnecessarily, and energy consumption of the UE can be reduced.

In addition, according to the embodiments of the present specification, the following effects may also be provided.

In a mobile cell environment, a type in which a cell is operated periodically/non-periodically for a partial time period may be considered. In this case, the UE may need to perform handover to another cell that is created after a certain period of time when a cell being accessed disappears. In the existing handover process, the handover process shall be completed within the handover interrupt time from the time of receiving the handover command message. However, since the cell that needs to be handed over does not currently exist and is created after a certain period of time, if the handover is performed in the current method, there is a very high possibility that the UE cannot complete the handover process to the arriving cell within the handover interrupt time.

According to the present specification, arrival/operating time information of the next serving drone base station is included in the handover command message so that handover can be performed to a cell created after a relatively long time. In addition, by changing the starting point of the handover interrupt time, a handover process to a cell created after a certain time can be performed.

By improving the handover method so that handover can be performed to a cell created after a relatively long time, in a mobile cell environment, when a cell currently being accessed is terminated and a new cell is created, handover can be successfully performed to the corresponding cell.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

On the other hand, the contents to which the above-described examples are applied may be described as follows from various subject points of view.

The following drawings are made to explain a specific example of the present specification. Since the names of specific devices or names of specific signals/messages/fields described in the drawings are provided as examples, the technical features of the present specification are not limited to the specific names used in the drawings below.

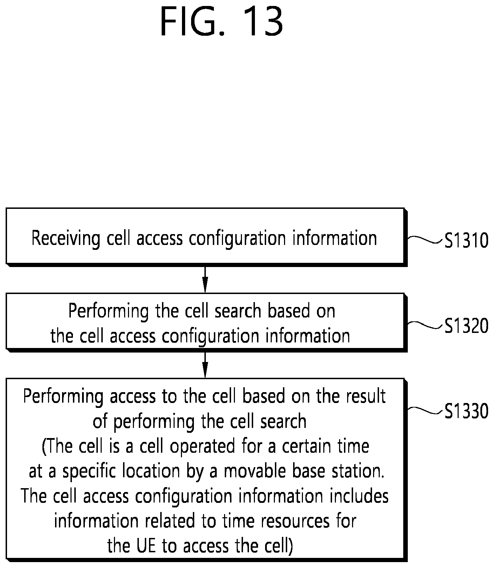

FIG. 13 is a flowchart of a method of performing access to a cell, from a UE point of view, according to an embodiment of the present specification.

According to FIG. 13, the UE may receive cell access configuration information (S1310). Since a more specific embodiment of this is the same as described above (and will be described later), repeated description of redundant content will be omitted for convenience of explanation.

The UE may perform the cell search based on the cell access configuration information (S1320). Since a more specific embodiment of this is the same as described above (and will be described later), repeated description of redundant content will be omitted for convenience of explanation.

The UE may perform access to the cell based on the result of performing the cell search (S1330). Since a more specific embodiment of this is the same as described above (and will be described later), repeated description of redundant content will be omitted for convenience of explanation.

Here, the cell may be a cell operated for a certain time at a specific location by a movable base station. In addition, the cell access configuration information may include information related to time resources for the UE to access the cell. Since a more specific embodiment of this is the same as described above (and will be described later), repeated description of redundant content will be omitted for convenience of explanation.

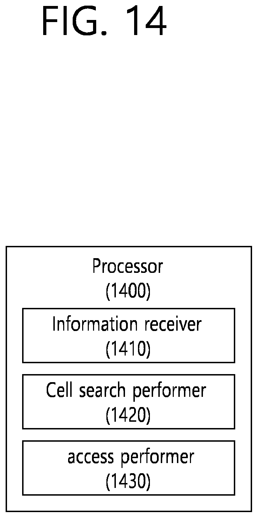

FIG. 14 is a block diagram of an example of an apparatus for accessing a cell, from a UE point of view, according to an embodiment of the present specification.

According to FIG. 14, a processor 1400 may include an information receiver 1410, a cell search performer 1420, and an access performer 1430. Since a more specific embodiment of this is the same as described above (and will be described later), repeated description of redundant content will be omitted for convenience of explanation.

The information receiving unit 1410 may be configured to control a transceiver to receive cell access configuration information. Since a more specific embodiment of this is the same as described above (and will be described later), repeated description of redundant content will be omitted for convenience of explanation.

The cell search performer 1420 may be configured to perform the cell search based on the cell access configuration information. Since a more specific embodiment of this is the same as described above (and will be described later), repeated description of redundant content will be omitted for convenience of explanation.

The access performer 1430 may be configured to access a cell based on a result of the cell search. Since a more specific embodiment of this is the same as described above (and will be described later), repeated description of redundant content will be omitted for convenience of explanation.

Here, the cell may be a cell operated for a certain time at a specific location by a movable base station. In addition, the cell access configuration information may include information related to time resources for the UE to access the cell. Since a more specific embodiment of this is the same as described above (and will be described later), repeated description of redundant content will be omitted for convenience of explanation.

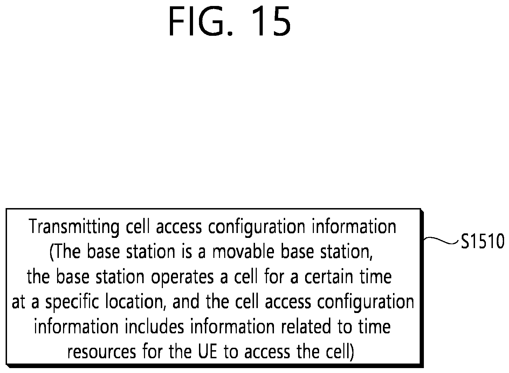

FIG. 15 is a flowchart of a method of transmitting cell access configuration information from a base station perspective, according to an embodiment of the present specification.

The base station may transmit cell access configuration information (S1510). Since a more specific embodiment of this is the same as described above (and will be described later), repeated description of redundant content will be omitted for convenience of explanation.

Here, the base station is a movable base station, the base station operates a cell for a certain time at a specific location, and the cell access configuration information may include information related to time resources for the UE to access the cell. Since a more specific embodiment of this is the same as described above (and will be described later), repeated description of redundant content will be omitted for convenience of explanation.

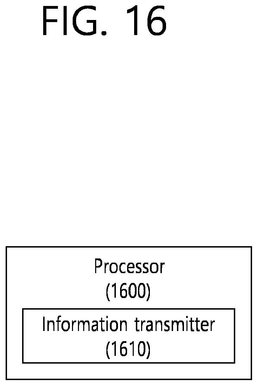

FIG. 16 is a block diagram of an example of an apparatus for transmitting cell access configuration information from a base station perspective, according to an embodiment of the present specification.

According to FIG. 16, the processor 1600 may include an information transmitter 1610. Since a more specific embodiment of this is the same as described above (and will be described later), repeated description of redundant content will be omitted for convenience of explanation.

The information transmission unit 1610 may be configured to control the transceiver to transmit cell access configuration information. Since a more specific embodiment of this is the same as described above (and will be described later), repeated description of redundant content will be omitted for convenience of explanation.

Here, the base station is a movable base station, the base station operates a cell for a certain time at a specific location, and the cell access configuration information may include information related to time resources for the UE to access the cell. Since a more specific embodiment of this is the same as described above (and will be described later), repeated description of redundant content will be omitted for convenience of explanation.

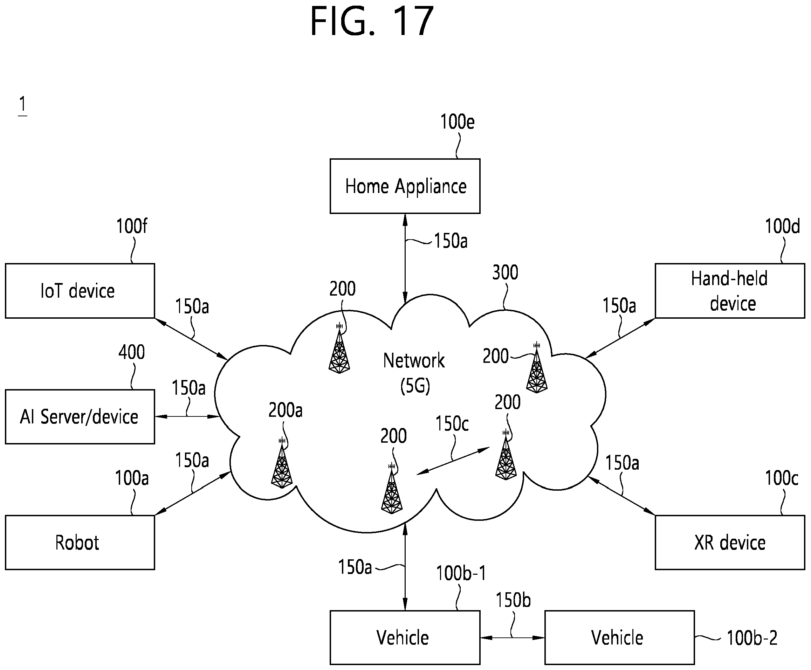

FIG. 17 illustrates a communication system 1 applied to the disclosure.

Referring to FIG. 17, the communication system 1 applied to this specification includes a wireless device, a base station, and a network. Here, the wireless device refers to a device that performs communication using a radio access technology (e.g., 5G new RAT (NR) or Long-Term Evolution (LTE)) and may be referred to as a communication/wireless/5G device. The wireless device may include, but limited to, a robot 100a, a vehicle 100b-1 and 100b-2, an extended reality (XR) device 100c, a hand-held device 100d, a home appliance 100e, an Internet of things (IoT) device 100f, and an AI device/server 400. For example, the vehicle may include a vehicle having a wireless communication function, an autonomous driving vehicle, a vehicle capable of inter-vehicle communication, or the like. Here, the vehicle may include an unmanned aerial vehicle (UAV) (e.g., a drone). The XR device may include augmented reality (AR)/virtual reality (VR)/mixed reality (MR) devices and may be configured as a head-mounted device (HMD), a vehicular head-up display (HUD), a television, a smartphone, a computer, a wearable device, a home appliance, digital signage, a vehicle, a robot, or the like. The hand-held device may include a smartphone, a smartpad, a wearable device (e.g., a smart watch or smart glasses), and a computer (e.g., a notebook). The home appliance may include a TV, a refrigerator, a washing machine, and the like. The IoT device may include a sensor, a smart meter, and the like. The base station and the network may be configured, for example, as wireless devices, and a specific wireless device 200a may operate as a base station/network node for other wireless devices.

The wireless devices 100a to 100f may be connected to the network 300 through the base station 200. Artificial intelligence (AI) technology may be applied to the wireless devices 100a to 100f, and the wireless devices 100a to 100f may be connected to an AI server 400 through the network 300. The network 300 may be configured using a 3G network, a 4G (e.g., LTE) network, or a 5G (e.g., NR) network. The wireless devices 100a to 100f may communicate with each other via the base station 200/network 300 and may also perform direct communication (e.g. sidelink communication) with each other without passing through the base station/network. For example, the vehicles 100b-1 and 100b-2 may perform direct communication (e.g. vehicle-to-vehicle (V2V)/vehicle-to-everything (V2X) communication). Further, the IoT device (e.g., a sensor) may directly communicate with another IoT device (e.g., a sensor) or another wireless device 100a to 100f.

Wireless communications/connections 150a, 150b, and 150c may be established between the wireless devices 100a to 100f and the base station 200 and between the base stations 200. Here, the wireless communications/connections may be established by various wireless access technologies (e.g., 5G NR), such as uplink/downlink communication 150a, sidelink communication 150b (or D2D communication), and inter-base station communication 150c (e.g., relay or integrated access backhaul (IAB)). The wireless devices and the base station/wireless devices, and the base stations may transmit/receive radio signals to/from each other through the wireless communications/connections 150a, 150b, and 150c. For example, the wireless communications/connections 150a, 150b, and 150c may transmit/receive signals over various physical channels. To this end, at least some of various configuration information setting processes, various signal processing processes (e.g., channel encoding/decoding, modulation/demodulation, resource mapping/demapping, and the like), and resource allocation processes may be performed on the basis of various proposals of the disclosure.

Meanwhile, NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 5. For convenience of description, FR1 of the frequency ranges used for an NR system may refer to a "sub 6 GHz range", and FR2 may refer to an "above 6 GHz range" and may be referred to as a millimeter wave (mmW).

[Table 5]

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 6. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

[Table 6]

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

Hereinafter, an example of a wireless device to which the present specification is applied will be described.

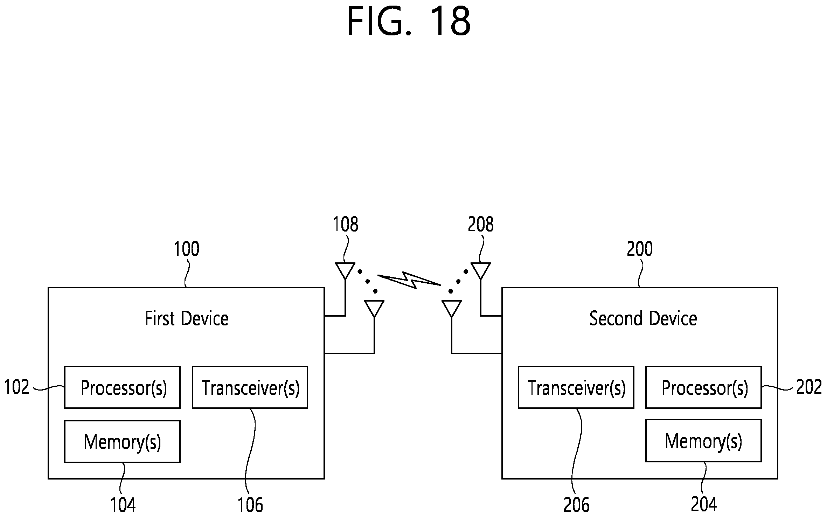

FIG. 18 illustrates a wireless device that is applicable to this specification.
Referring to FIG. 18, a first wireless device 100 and a second wireless device 200 may transmit and receive radio signals through various radio access technologies (e.g., LTE and NR). Here, the first wireless device 100 and the second wireless device 200 may respectively correspond to a wireless device 100x and the base station 200, and/or may respectively correspond to a wireless device 100x and a wireless device 100x of FIG. 17.
The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including instructions to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g., LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In the specification, the wireless device may refer to a communication modem/circuit/chip.
The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including instructions to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In the specification, the wireless device may refer to a communication modem/circuit/chip.

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202. The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or a combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

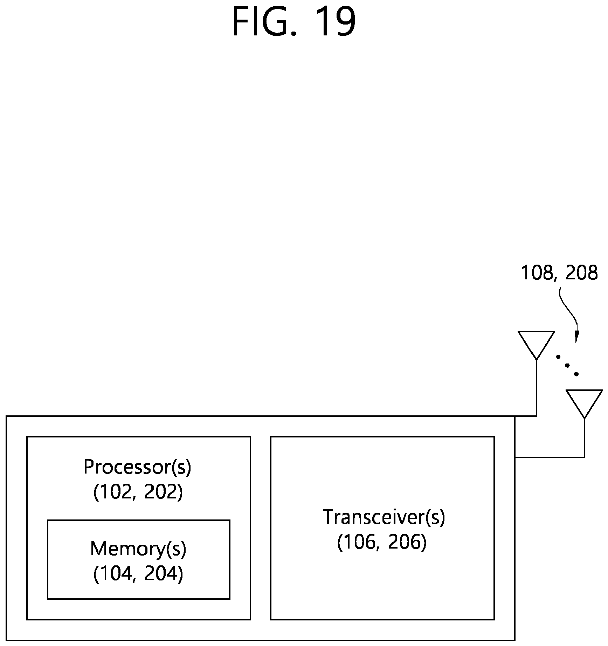

FIG. 19 shows another example of a wireless device applicable to the present specification.

According to FIG. 19, a wireless device may include at least one processor (102, 202), at least one memory (104, 204), at least one transceiver (106, 206), and one or more antennas (108, 208).

As a difference between the example of the wireless device described above in FIG. 18 and the example of the wireless device in FIG. 19, in FIG. 18, the processors 102 and 202 and the memories 104 and 204 are separated, but in the example of FIG. 19, the memory 104, 204 is included in the processor 102, 202.

Here, since the detailed description of the processors 102 and 202, the memories 104 and 204, the transceivers 106 and 206, and one or more antennas 108 and 208 have been described above, in order to avoid repetition of unnecessary description, Description of repeated description is omitted.

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of performing access to a cell performed by a user equipment (UE) in a wireless communication system, the method comprising:

   receiving cell access configuration information;
   performing a cell search based on the cell access configuration information; and
   performing access to the cell based on a result of performing the cell search,
   wherein the cell is a cell operated for a certain time at a specific location by a movable base station, and
   wherein the cell access configuration information includes information related to time resources for the UE to access the cell.

2. The method of claim 1, wherein the cell access configuration information includes an identity (ID) for the cell.

3. The method of claim 2, wherein the information related to the time resources includes at least one of i) a duration, ii) a period, and iii) at least one offset of time resources trying to access the cell corresponding to the ID.

4. The method of claim 1, wherein the UE attempts access to the cell in the time resources, and
   Wherein the UE does not attempt access to the cell in a time resource other than the time resources.

5. The method of claim 1, wherein the UE further receives other cell access configuration information different from the cell access configuration information, and
   wherein the other cell access configuration information includes information related to time resources for the UE to access another cell different from the cell.

6. The method of claim 1, wherein the time resources are time resources in which the cell is operated or time resources in which the cell is operated with a high probability.

7. The method of claim 1, wherein the cell access configuration information includes time resource information for periodic cell access or time resource information for aperiodic cell access.

8. The method of claim 1, wherein the UE performs handover within a specific time interval based on receiving a handover command message.

9. The method of claim 8, wherein the specific time interval is determined based on the information related to time resources.

10. The method of claim 1, wherein the base station is a drone or a hot air balloon, and
    wherein the cell operated by the base station has a fixed cell ID or a cell ID that varies according to movement.

11. A user equipment (UE) comprising:

    a transceiver;

at least one memory; and
at least one processor operably coupled with the at least one memory and the transceiver,
wherein the at least one processor is adapted to:

control the transceiver to receive cell access configuration information;
perform a cell search based on the cell access configuration information; and
perform access to the cell based on a result of performing the cell search,
wherein the cell is a cell operated for a certain time at a specific location by a movable base station, and
wherein the cell access configuration information includes information related to time resources for the UE to access the cell.

12. An apparatus, the apparatus comprising:

at least one memory; and
at least one processor operably coupled to the at least one memory,
wherein the at least one processor is adapted to:

control the transceiver to receive cell access configuration information;
perform a cell search based on the cell access configuration information; and
perform access to the cell based on a result of performing the cell search,
wherein the cell is a cell operated for a certain time at a specific location by a movable base station, and
wherein the cell access configuration information includes information related to time resources for the UE to access the cell.

13. At least one computer-readable medium (CRM) comprising an instruction based on being executed by at least one processor, wherein the instruction comprises:

controlling the transceiver to receive cell access configuration information;
performing a cell search based on the cell access configuration information; and
performing access to the cell based on a result of performing the cell search,
wherein the cell is a cell operated for a certain time at a specific location by a movable base station, and
wherein the cell access configuration information includes information related to time resources for the UE to access the cell.

14. A method of transmitting cell access configuration information performed by a base station in a wireless communication system, the method comprising:

transmitting cell access configuration information,
wherein the base station is a movable base station,
wherein the base station operates a cell for a certain time at a specific location, and
wherein the cell access configuration information includes information related to time resources for a user equipment (UE) to access the cell.

15. A base station comprising:

a transceiver;
at least one memory; and
at least one processor operably coupled with the at least one memory and the transceiver,
wherein the at least one processor is adapted to:

control the transceiver to transmit cell access configuration information,
wherein the base station is a movable base station,
wherein the base station operates a cell for a certain time at a specific location, and
wherein the cell access configuration information includes information related to time resources for a user equipment (UE) to access the cell.

# FIG. 1

# FIG. 2

**gNB**
- RRM between cells
- RB control
- Connection mobility control
- Wireless access control
- Measurement setting and providing
- Dynamic resource allocation (scheduler)

NG-RAN

**AMF**
- NAS security
- Idle state mobility processing

**UPF**
- Mobility anchoring
- PDU processing

**SMF**
- Terminal IP address allocation
- PDU session control

Internet

5GC

EP 4 221 326 A1

# FIG. 3

Frame (10 ms)

| 0 | 1 | 2 | 3 | 4 | 5 | 6 | 7 | 8 | 9 |
|---|---|---|---|---|---|---|---|---|---|

Subframe (1 ms)

15kHz 1Slot(14Symbol): 1ms Subframe

| 0 | 1 | 2 | 3 | 4 | 5 | 6 | 7 | 8 | 9 | 10 | 11 | 12 | 13 |
|---|---|---|---|---|---|---|---|---|---|---|---|---|---|

| 0 | 1 | 2 | 3 | 4 | 5 | 6 | 7 | 8 | 9 | 10 | 11 | 12 | 13 |
|---|---|---|---|---|---|---|---|---|---|---|---|---|---|

30kHz 1Slot(14Symbol): 0.5ms

| 0 | 1 | 2 | 3 | 4 | 5 | 6 | 7 | 8 | 9 | 10 | 11 | 12 | 13 |
|---|---|---|---|---|---|---|---|---|---|---|---|---|---|

60kHz 1Slot(14Symbol): 0.25ms

EP 4 221 326 A1

# FIG. 4

EP 4 221 326 A1

Downlink only, or Uplink only

Frequency

RB index

| | |
|---|---|

Symbol index

One TTI

: DL Control channel          : UL Control channel

# FIG. 5

enhanced mobile broadband(eMBB)

Gigabyte transfer per second

Artificial intelligence (e.g., big data)

3D video (4K screen)

Smart Home/Building

Work/play in the cloud

Augmented/Virtual/Mixed Reality

Voice

Industrial automation (e.g., robots)

Smart network (e.g., smart cities)

Mission-critical applications (e.g., healthcare)

Autonomous vehicles

massive MTC
(mMTC)

reliability/ultra-low latency communication
(URLLC)

edge computing

EP 4 221 326 A1

# FIG. 6

# FIG. 7

```
┌─────────────┐                          ┌──────────────┐
│     UE      │                          │ Base station │
└─────────────┘                          └──────────────┘
       │                                          │
┌───────────────────────────┐                     │
│ Performing the cell search │  ～S710             │
│   based on the cell access │                     │
│  configuration information │                     │
└───────────────────────────┘                     │
┌───────────────────────────┐                     │
│ Performing access to the cell│ ～S720            │
│    based on the result of  │◄───────────────────►│
│  performing the cell search │                    │
└───────────────────────────┘                     │
       │                                          │
```

# FIG. 8

# FIG. 9

# FIG. 10

# FIG. 11

# FIG. 12

| Drone Base station #1 (DB_L) | | UE | | Drone Base station #2 (DB_A) |
|---|---|---|---|---|

Communication with the UE at time duration T1 — S1210

Determining the need for handover — S1220

Handover command message
(For example, including information for
notifying the arrival/operating time (T2) of DB_A, or
for correcting the previously informed time) — S1230

Applying the setting of
the handover command message — S1240

Communicating with the DB_A
based on the handover command message
(For example, communicating
with DB_A at corresponding time based on
the arrival/operating time (T2) of DB_A) — S1250

# FIG. 13

Receiving cell access configuration information ~S1310

Performing the cell search based on
the cell access configuration information ~S1320

Performing access to the cell based on the result
of performing the cell search
(The cell is a cell operated for a certain time
at a specific location by a movable base station.
The cell access configuration information includes
information related to time resources for
the UE to access the cell) ~S1330

# FIG. 14

```
┌─────────────────────────────────┐
│          Processor              │
│          (1400)                 │
│  ┌───────────────────────────┐  │
│  │   Information receiver    │  │
│  │         (1410)            │  │
│  └───────────────────────────┘  │
│  ┌───────────────────────────┐  │
│  │   Cell search performer   │  │
│  │         (1420)            │  │
│  └───────────────────────────┘  │
│  ┌───────────────────────────┐  │
│  │     access performer      │  │
│  │         (1430)            │  │
│  └───────────────────────────┘  │
└─────────────────────────────────┘
```

# FIG. 15

Transmitting cell access configuration information
(The base station is a movable base station,
the base station operates a cell for a certain time
at a specific location, and the cell access configuration
information includes information related to time
resources for the UE to access the cell) ~S1510

# FIG. 16

Processor
(1600)

Information transmitter
(1610)

# FIG. 17

# FIG. 18

EP 4 221 326 A1

# FIG. 19

108, 208

Processor(s)
(102, 202)

Memory(s)
(104, 204)

Transceiver(s)
(106, 206)

<table>
<tr><td colspan="2">**INTERNATIONAL SEARCH REPORT**</td><td colspan="2">International application No.<br>**PCT/KR2021/012959**</td></tr>
</table>

**A.    CLASSIFICATION OF SUBJECT MATTER**

**H04W 36/00**(2009.01)i; **H04W 36/30**(2009.01)i; **H04W 36/32**(2009.01)i; **H04W 36/08**(2009.01)i; **H04W 84/06**(2009.01)i; **H04W 48/10**(2009.01)i; **H04W 48/16**(2009.01)i; **H04W 72/04**(2009.01)i; **H04W 84/00**(2009.01)i

According to International Patent Classification (IPC) or to both national classification and IPC

**B.    FIELDS SEARCHED**

Minimum documentation searched (classification system followed by classification symbols)

H04W 36/00(2009.01); H04J 11/00(2006.01); H04W 36/14(2009.01); H04W 36/18(2009.01); H04W 36/30(2009.01); H04W 48/08(2009.01); H04W 48/16(2009.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 드론(drone), 셀 탐색(cell search), 핸드오버(handover), 위치(location), 주기(cycle), 셀 액세스(cell access)

**C.    DOCUMENTS CONSIDERED TO BE RELEVANT**

| Category* | Citation of document, with indication, where appropriate, of the relevant passages | Relevant to claim No. |
|---|---|---|
| X | US 2020-0107237 A1 (NOKIA TECHNOLOGIES OY) 02 April 2020 (2020-04-02)<br>See paragraphs [0068] and [0073]; and claim 1. | 1,4-9,11-15 |
| Y | | 2-3,10 |
| Y | WO 2016-021816 A1 (LG ELECTRONICS INC.) 11 February 2016 (2016-02-11)<br>See paragraphs [0084]-[0085]; and claim 1. | 2-3,10 |
| A | US 2019-0306785 A1 (LG ELECTRONICS INC.) 03 October 2019 (2019-10-03)<br>See paragraphs [0206]-[0220]; and figure 8. | 1-15 |
| A | KR 10-2017-0007407 A (LG ELECTRONICS INC.) 18 January 2017 (2017-01-18)<br>See paragraphs [0087]-[0088]; and claims 1 and 5-6. | 1-15 |
| A | JP 2012-090114 A (PANASONIC CORP.) 10 May 2012 (2012-05-10)<br>See claims 1 and 4. | 1-15 |

☐ Further documents are listed in the continuation of Box C.     ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **15 December 2021** | **15 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

International application No.

**PCT/KR2021/012959**

| Patent document cited in search report | | | Publication date (day/month/year) | Patent family member(s) | | | Publication date (day/month/year) |
|---|---|---|---|---|---|---|---|
| US | 2020-0107237 | A1 | 02 April 2020 | None | | | |
| WO | 2016-021816 | A1 | 11 February 2016 | US | 2017-0237513 | A1 | 17 August 2017 |
| | | | | US | 9813180 | B2 | 07 November 2017 |
| US | 2019-0306785 | A1 | 03 October 2019 | WO | 2017-051942 | A1 | 30 March 2017 |
| KR | 10-2017-0007407 | A | 18 January 2017 | EP | 3166358 | A1 | 10 May 2017 |
| | | | | EP | 3166358 | B1 | 26 September 2018 |
| | | | | JP | 2017-522791 | A | 10 August 2017 |
| | | | | JP | 6295349 | B2 | 14 March 2018 |
| | | | | KR | 10-1867831 | B1 | 18 June 2018 |
| | | | | US | 10009800 | B2 | 26 June 2018 |
| | | | | US | 2017-0142618 | A1 | 18 May 2017 |
| | | | | WO | 2016-003044 | A1 | 07 January 2016 |
| JP | 2012-090114 | A | 10 May 2012 | None | | | |